Europäisches Patentamt

(19) European Patent Office

Office européen des brevets

(11) Numéro de publication: **0 079 290**
**A1**

# (12) DEMANDE DE BREVET EUROPEEN

(21) Numéro de dépôt: **82402052.3**

(22) Date de dépôt: **08.11.82**

(51) Int. Cl.³: **C 21 C 5/46**

(30) Priorité: **10.11.81 FR 8121030**

(43) Date de publication de la demande:
**18.05.83 Bulletin 83/20**

(84) Etats contractants désignés:
**AT BE CH DE GB IT LI SE**

(71) Demandeur: **FIVES-CAIL BABCOCK, Société anonyme
7 rue Montalivet
F-75383 Paris Cedex 08(FR)**

(72) Inventeur: **Menu, Edouard
56, boulevard de la République
F-78000 Versailles(FR)**

(74) Mandataire: **Fontanié, Etienne
FIVES-CAIL BABCOCK 7, rue Montalivet
F-75383 Paris Cedex 08(FR)**

(54) **Installation d'affinage équipée d'un dispositif de mesure de la température et/ou de prélèvement d'échantillons d'un bain d'acier liquide.**

(57) Installation d'affinage équipée d'un dispositif de mesure de la température et/ou de prélèvement d'échantillons d'un bain d'acier liquide dans un convertisseur du type dans lequel le chargement, la coulée et le décrassage s'effectuent d'un même côté.

En vue de limiter l'encombrement en hauteur, la cornue (1) présente un orifice (4) pratiqué dans sa paroi suivant une direction oblique, du côté opposé à celui qui est mouillé par le liquide, et le dit dispositif comprend une perche (26) passant à travers l'orifice (4), l'extrémité de ladite perche étant munie d'une cartouche (27) de mesure de température et/ou de prélèvement d'échantillons, et un système de manutention de la perche (26) pour l'introduire dans la cornue (1), l'en extraire et l'amener en position de remplacement de la cartouche (27) avant de procéder à une nouvelle opération.

./...

EP 0 079 290 A1

Fig. 2

Installation d'affinage équipée d'un dispositif de mesure
de la température et/ou de prélèvement d'échantillons d'un
bain d'acier liquide

La présente invention concerne la mesure de la température
et/ou le prélèvement d'échantillons dans un bain d'acier
liquide en cours d'affinage dans un convertisseur, plus
particulièrement dans un convertisseur du type A.O.D.
(Argon - Oxygène - Décarburation).

Il est connu de réaliser l'organe de mesure de température
ou l'organe de prélèvement d'échantillons, sous la forme
d'une cartouche que l'on monte à l'extrémité d'une perche
apte à être introduite dans le bain de métal liquide, au
fond de la cornue du convertisseur.

D'une façon générale, la perche est introduite verticalement
par l'ouverture de la cornue après avoir traversé un orifice
pratiqué dans la hotte surmontant ladite cornue. Dans le cas
où le convertisseur comprend une lance de soufflage d'oxygène
par le haut, la perche et la lance sont disposées parallèlement l'une à l'autre dans les mêmes conditions. On doit alors
disposer d'une hauteur importante au-dessus de la cornue pour
procéder à l'extraction de la perche hors de ladite cornue.

Cela constitue un inconvénient sérieux, notamment lorsque le
convertisseur est installé dans une halle équipée à sa
partie supérieure d'un pont roulant associé à des moyens de
levage permettant d'effectuer les différentes manutentions
indispensables, ce qui est le cas avec un convertisseur
A.O.D.

L'invention a surtout pour but d'éviter les inconvénients
précités.

Elle part du fait que dans un convertisseur A.O.D. le chargement, la coulée et le décrassage s'effectuent d'un même côté de la cornue, plus précisément du côté muni d'un bec de coulée.

Elle consiste essentiellement à introduire la perche dans la cornue et à l'extraire de ladite cornue par un orifice pratiqué à travers le côté opposé qui n'est jamais mouillé par le liquide.

L'invention a plus précisément pour objet une installation d'affinage équipée d'un dispositif de mesure de la température et/ou de prélèvement d'échantillons d'un bain d'acier liquide dans un convertisseur d'aciérie, plus particulièrement dans un convertisseur A.O.D. suivant lequel le chargement, la coulée et le décrassage s'effectuent d'un même côté de la cornue dudit convertisseur, caractérisée en ce que la cornue présente un orifice pratiqué dans sa paroi suivant une direction oblique, du côté opposé à celui qui est mouillé par le liquide, et en ce que ledit dispositif comprend une perche passant à travers l'orifice, l'extrémité de ladite perche étant munie d'une cartouche de mesure de température et/ou de prélèvement d'échantillons, et un système de manutention de la perche pour l'introduire dans la cornue, l'en extraire et l'amener en position de remplacement de la cartouche avant de procéder à une nouvelle opération.

L'orifice de passage de la perche présente une section transversale oblongue, afin d'autoriser un certain basculement de la cornue au cours d'une opération d'affinage.

L'orifice est avantageusement positionné de telle sorte que le plan vertical contenant l'axe géométrique de la perche et le plan vertical contenant l'axe géométrique de basculement de la cornue soient distincts, et préférablement parallèles.

L'orifice est également positionné de telle sorte que l'angle $\alpha$ fait par la projection sur un plan horizontal de l'axe géométrique de basculement, et la droite joignant le centre de l'orifice au centre de la section transversale de la cornue soit au plus égal à 60°.

Le système de manutention comprend un premier chariot déplaçable en translation le long d'une voie horizontale solidaire de la structure de l'installation du convertisseur, un montant solidaire dudit chariot, un vérin articulé à l'extrémité supérieure dudit montant, un châssis articulé, d'une part sur l'extrémité de la tige du vérin, d'autre part, sur un axe horizontal solidaire du premier chariot, et un deuxième chariot déplaçable en translation le long dudit châssis, la perche étant solidaire dudit deuxième chariot qui commande son entrée dans la cornue, puis son extraction hors de ladite cornue à travers l'orifice pratiqué dans la paroi de celle-ci, après quoi, le châssis est entraîné en translation par le premier chariot et basculé de la position oblique à la position verticale par le vérin.

Il est avantageusement prévu un poste de travail pour remplacer une cartouche par une autre, ledit poste disposé sous la voie du premier chariot recevant l'extrémité de la perche amenée en position verticale.

L'invention sera mieux comprise en se référant à la description qui suit, faite en regard des dessins annexés, concernant une forme particulière de réalisation donnée à titre d'exemple non limitatif.

La figure 1 est une vue de la cornue en coupe élévation par un plan médian perpendiculaire à l'axe horizontal de basculement.

La figure 2 représente, en élévation, une installation d'affinage selon l'invention.

La figure 3 représente cette installation, vue en plan.

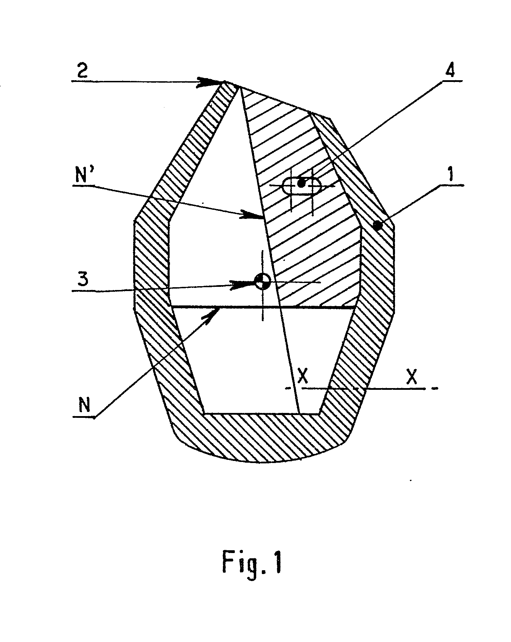

Sur la figure 1, le repère 1 désigne globalement la cornue d'un convertisseur du type A.O.D. Le repère 2 en désigne le bec et le repère 3 un tourillon de basculement. Le soufflage d'oxygène est effectué par le bas au moyen d'un ensemble de tuyères horizontales. La ligne X-X désigne l'axe de l'une d'entre elles qui est situé dans le plan de la figure. Les tuyères traversent la paroi de la cornue 1 sur une distance angulaire de 120° par exemple. La ligne N désigne le niveau du bain en cours d'affinage, tandis que la ligne N' désigne le niveau du bain en position de coulée. On voit qu'une partie de la cornue n'est jamais occupée par du liquide, cette partie est représentée par la surface hachurée sur la figure. Un orifice 4 est pratiqué à travers la paroi de la cornue qui n'est jamais mouillée. Cet orifice prévu pour le passage d'une perche de mesure de température et/ou de prélèvement d'échantillons présente une forme oblongue afin de tenir compte d'un certain basculement de la cornue en service. L'angle de basculement est de l'ordre de 10°, soit 5° de part et d'autre de la position verticale de la cornue telle que représentée sur la figure.

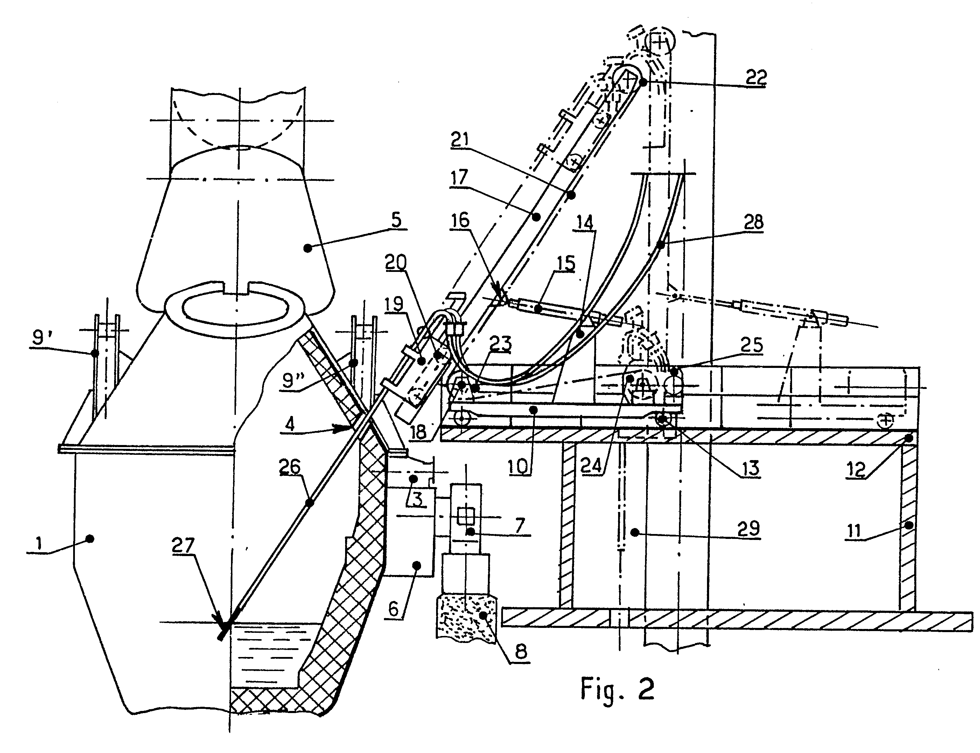

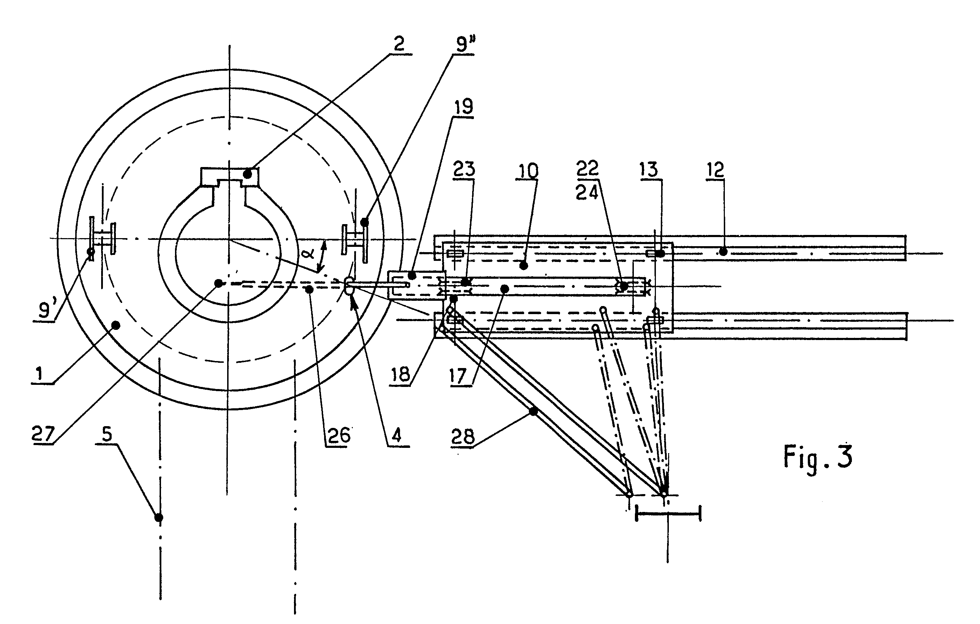

Sur les figures 2 et 3, on a représenté une installation selon l'invention, dans le cas particulier d'une mesure de température.

Outre la cornue 1, le convertisseur comprend une hotte 5, une ceinture 6 et deux paliers, tels que 7, supportant les tourillons de basculement 3. Pour des raisons de simplification, la ceinture 6 et le palier coopérant avec le palier 7 n'ont pas été représentés sur la figure 2, à la gauche de la cornue 1. De ce côté de la cornue sont également prévus un moteur d'entraînement et un réducteur de vitesse de types usuels, non représentés, qui sont montés, de même que les paliers, sur une structure fixe 8 supportant l'installation. La cornue 1 est par ailleurs munie de deux bretelles 9' et 9" constituant des éléments d'accrochage pour un engin de levage.

On va maintenant décrire les éléments constituant le dispositif de mesure de température.

Le repère 10 désigne un chariot déplaçable en translation le long d'une voie horizontale solidaire de la structure 8 par l'intermédiaire de poteaux tels que 11. Cette voie horizontale est avantageusement constituée par deux poutres 12 sur lesquelles viennent rouler des galets 13 équipant le chariot 10. Deux au moins de ces galets, ceux d'extrémité arrière, représentés à droite sur les dessins, sont par exemple des galets moteurs.

Le chariot 10 porte un montant 14 à l'extrémité supérieure duquel est articulé un vérin 15. La tige de ce vérin est articulée en 16 à un châssis incliné 17 dont il va être parlé plus en détail ci-après.

Le châssis 17 est articulé, par ailleurs, sur un axe horizontal 18 solidaire de la partie avant du chariot 10. Le châssis 17 constitue une voie de roulement pour un chariot 19 monté sur des galets 20. Le déplacement du chariot 19 est commandé par un câble 21 qui passe sur une poulie 22 montée sur l'extrémité arrière du châssis 17, puis sur une poulie 23 montée sur la partie avant du chariot 10, la poulie 23 étant avantageusement montée autour de l'axe 18, puis s'enroule autour d'un treuil 24 monté à la partie arrière du chariot 10. Le treuil 24 est commandé par un groupe moto-réducteur 25 également porté par le chariot 10.

Le chariot 19 supporte une perche 26 à l'extrémité de laquelle est montée une cartouche 27 de mesure de la température du bain d'acier liquide contenu dans la cornue 1. Cette perche est disposée parallèlement à la direction du châssis 17 dont l'inclinaison permet à la perche 26 de pénétrer dans la cornue 1 à travers l'orifice 4. La perche 26 est avantageusement réalisée sous une forme tubulaire.

Des flexibles, tels que 28, permettent d'établir une circulation d'eau et d'assurer ainsi le refroidissement intérieur de la perche 26, et par conséquent sa bonne tenue au rayonnement intense du bain.

Sur les figures 2 et 3, on a représenté le dispositif en traits pleins dans le cas où la perche 26 est en position de mesure.

La mesure étant effectuée, on commande le treuil 24 qui, par l'intermédiaire du câble 21, provoque la remontée du chariot 19 le long du châssis 17. Lorsque le chariot 19 atteint sa position de fin de course, la perche 26 est extraite de la cornue 1. On commande alors le déplacement du chariot 10 qui entraîne en translation le châssis 17 et la perche 26 vers la partie droite des figures 2 et 3. Lorsque le chariot 10 atteint sa position de fin de course, on commande le vérin 15 qui fait basculer le châssis 17 de la position oblique à la position verticale. On peut alors faire descendre le chariot 19 de telle sorte que l'extrémité de la perche 26, passant entre les deux poutres 12, pénètre dans un poste 29 défini par la structure de l'installation. A l'intérieur de ce poste, il est aisé de procéder au remplacement de la cartouche 27 extraite du bain de métal liquide par une cartouche neuve en vue de procéder à une nouvelle mesure. Les différents élements du dispositif occupent alors les positions représentées en traits discontinus sur les figures 2 et 3.

Il va de soi que, pour procéder à une nouvelle mesure de température, il suffit d'effectuer en sens inverse les opérations que l'on vient de décrire.

L'installation est rigoureusement identique dans le cas où la perche 26, au lieu de porter un organe de mesure de température tel que la cartouche précitée, porte à son extrémité un organe de prélèvement d'échantillon de métal liquide ou un organe combiné permettant d'effectuer simultanément les deux opérations.

Afin de se réserver la possibilité d'adjoindre au convertisseur une lance de soufflage d'oxygène par le haut, il y a lieu de positionner le trou 4 de telle sorte que la dite lance ne rencontre pas la perche 26. A cet effet, le plan vertical contenant l'axe géométrique de la perche est distinct du plan vertical contenant l'axe géométrique de l'axe de basculement de la cornue 1 dans lequel la lance est disposée en position centrale. Comme on le voit sur la figure 3, ces deux plans sont ici parallèles.

Comme on le voit sur la figure 3, l'orifice 4 est toujours situé, en plan, dans le quadrant sud-est de la section horizontale de la cornue 1. Les deux quadrants nord correspondent à des zones mouillées par le liquide. La disposition dans le quadrant sud-ouest, quoique théoriquement possible, est pratiquement rendue impossible par la présence, de ce côté de la cornue 1, des organes de commande de ladite cornue. Il faut d'autre part, que la position angulaire de l'orifice 4, à l'intérieur de son quadrant, corresponde à un angle $\alpha$ inférieur à 90°, compte tenu de la présence de la hotte 5. La valeur limite de l'angle $\alpha$ est pratiquement de 60°, ledit angle étant défini par la projection sur un plan horizontal de l'axe géométrique de basculement et de la droite joignant le centre de l'orifice 4 au centre de la section transversale de la cornue 1.

Bien que l'invention ait été décrite en référence à une forme particulière de réalisation, il va de soi qu'elle n'y est en rien limitée et que des modifications peuvent lui être apportées sans sortir de son domaine. On pourra notamment remplacer l'un quelconque des moyens décrits par un moyen techniquement équivalent. L'invention couvre donc, outre l'exemple représenté, ses différentes variantes d'exécution.

Revendications

1. Installation d'affinage équipée d'une dispositif de mesure de la température et/ou de prélèvement d'échantillons d'un bain d'acier liquide dans un convertisseur d'aciérie, plus particulièrement dans un convertisseur A.O.D. suivant lequel le chargement, la coulée et le décrassage s'effectuent d'un même côté de la cornue dudit convertisseur, caractérisée en ce que la cornue (1) présente un orifice (4) pratiqué dans sa paroi suivant une direction oblique, du côté opposé à celui qui est mouillé par le liquide, et en ce que ledit dispositif comprend une perche (26) passant à travers l'orifice (4), l'extrémité de ladite perche étant munie d'une cartouche (27) de mesure de température et/ou de prélèvement d'échantillons, et un système de manutention de la perche (26) pour l'introduire dans la cornue (1), l'en extraire et l'amener en position de remplacement de la cartouche (27) avant de procéder à une nouvelle opération.

2. Installation suivant la revendication 1, caractérisée en ce que l'orifice (4) de passage de la perche (26) présente une section transversale oblongue, afin d'autoriser un certain basculement de la cornue (1), au cours d'une opération d'affinage.

3. Installation suivant l'une des revendications 1 ou 2, caractérisée en ce que l'orifice (4) est positionné de telle sorte que le plan vertical contenant l'axe géométrique de la perche (26) et le plan vertical contenant l'axe géométrique de basculement de la cornue (1) soient distincts, et préférablement parallèles.

4. Installation suivant l'une des revendications 1 à 3, caractérisée en ce que l'orifice (4) est positionné de telle sorte que l'angle $\alpha$ défini par la projection sur un plan horizontal de l'axe géométrique de basculement, et par la droite joignant le centre de l'orifice (4) au centre de la section transversale de la cornue (1) soit au plus égal à 60°.

5. Installation suivant l'une des revendications 1 à 4, caractérisée en ce que le système de manutention comprend un premier chariot (10) déplaçable en translation le long d'une voie horizontale (12) solidaire de la structure (8) de l'installation du convertisseur, un montant (14) solidaire dudit chariot, un vérin (15) articulé sur l'extrémité supérieure dudit montant, un châssis (17) articulé, d'une part sur l'extrémité de la tige du vérin (15), d'autre part, sur un axe horizontal (18) solidaire du premier chariot (10), et un deuxième chariot (19) déplaçable en translation le long dudit châssis, la perche (26) étant solidaire dudit deuxième chariot qui commande son entrée dans la cornue (1) puis son extraction hors de la cornue (1) à travers l'orifice (4) pratiqué dans celle-ci, après quoi le châssis (17) est entraîné en translation par le premier chariot (10) et basculé de la position oblique à la position verticale par le vérin (15).

6. Installation suivant la revendication 5, caractérisée en ce qu'il est prévu un poste de travail (29) pour remplacer une cartouche (27) par une autre, ledit poste disposé sous la voie (12) du premier chariot (10) recevant l'extrémité de la perche (26) amenée en position verticale.

Fig.1

Fig. 2

Fig. 3

**0079290**

Numéro de la demande

**RAPPORT DE RECHERCHE EUROPEENNE**

Office européen
des brevets

EP 82 40 2052

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl ³) |
|---|---|---|---|
| | --- | | C 21 C    5/46 |
| A | US-A-3 920 447  (D.L.SCHROEDER et al.) *Colonne  4, lignes 53-60; figure 1* | 1 | |
| A | --- US-A-3 717 034  (D.A.DUKELOW et al.) | | |
| A | --- DE-A-2 521 833   (KRUPP) | . | |
| A | --- US-A-3 830 480  (L.A.GRANT) | | |
| | ----- | | |

| | DOMAINES TECHNIQUES RECHERCHES (Int. Cl. ³) |
|---|---|
| | C 21 C F 27 D G 01 N |

Le présent rapport de recherche a été établi pour toutes les revendications

| Lieu de la recherche LA HAYE | Date d'achèvement de la recherche 15-02-1983 | Examinateur OBERWALLENEY R.P.L.I |
|---|---|---|